(19) Europäisches Patentamt
European Patent Office
Office européen des brevets

(11) **EP 4 654 275 A1**

(12) **EUROPEAN PATENT APPLICATION**

(43) Date of publication:
**26.11.2025 Bulletin 2025/48**

(21) Application number: **25178016.9**

(22) Date of filing: **21.05.2025**

(51) International Patent Classification (IPC):
**H01M 4/13** (2010.01)  **H01M 4/62** (2006.01)
**H01M 10/0525** (2010.01)

(52) Cooperative Patent Classification (CPC):
**H01M 4/13; H01M 4/625; H01M 10/0525;**
H01M 4/131

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **21.05.2024 KR 20240065987**

(71) Applicant: **SAMSUNG SDI CO., LTD.**
**Yongin-si, Gyeonggi-do 17084 (KR)**

(72) Inventors:
• **Lee, Seongsun**
 **17084 Yongin-si (KR)**
• **Oh, Songyul**
 **17084 Yongin-si (KR)**

• **Lee, Minju**
 **17084 Yongin-si (KR)**
• **Lee, Junsik**
 **17084 Yongin-si (KR)**
• **Kang, Younghye**
 **17084 Yongin-si (KR)**
• **Lee, Boram**
 **17084 Yongin-si (KR)**
• **Ko, Donghyun**
 **17084 Yongin-si (KR)**
• **Choi, Kyuhwan**
 **17084 Yongin-si (KR)**

(74) Representative: **Michalski Hüttermann & Partner**
**Patentanwälte mbB**
**Kaistraße 16A**
**40221 Düsseldorf (DE)**

(54) **CONDUCTIVE MATERIAL DISPERSED LIQUID, ELECTRODE COMPOSITION, ELECTRODE FOR RECHARGEABLE LITHIUM BATTERIES, AND RECHARGEABLE LITHIUM BATTERIES**

(57) Disclosed are conductive material dispersion liquid including nanocarbon, a fluorine-containing lithium salt, a solvent, an electrode composition, an electrode for a rechargeable lithium battery, and a rechargeable lithium battery.

FIG. 1

EP 4 654 275 A1

Description

CROSS-REFERENCE TO RELATED APPLICATION

This application claims the benefit of priority to Korean Patent Application No. 10-2024-0065987 filed in the Korean Intellectual Property Office on May 21, 2024.

BACKGROUND

1. Field

Conductive material dispersed liquid, electrode compositions, electrodes for rechargeable lithium batteries, and rechargeable lithium batteries are disclosed.

2. Description of the Related Art

A portable information device such as, e.g., a cell phone, a laptop, smart phone, and the like, or an electric vehicle, typically uses a rechargeable lithium battery having high energy density and portability as a driving power source. Rechargeable lithium batteries with high energy density as a driving power source or power storage power source may also be used for hybrid or electric vehicles.

In order to implement a rechargeable lithium battery suitable for the above applications, lithium cobalt-based oxide, lithium nickel-based oxide, lithium nickel manganese cobalt composite oxide, lithium nickel cobalt aluminum composite oxide, etc. are typically used as a positive electrode active material.

As a negative electrode active material, various types of carbon-based materials capable of intercalating/deintercalating lithium such as, e.g., artificial graphite, natural graphite, and hard carbon have been applied, but a non-carbon-based negative electrode active material based on silicon or tin may also be able to achieve substantially higher capacity.

SUMMARY

Some example embodiments include a conductive material dispersed liquid, an electrode composition, an electrode for a rechargeable lithium battery, and a rechargeable lithium battery that can improve processability by lowering the viscosity and increasing the solid content.

In some example embodiments, a conductive material dispersed liquid may include nanocarbon, a fluorine-containing lithium salt, and a solvent.

In some example embodiments, an electrode composition includes the aforementioned conductive material dispersed liquid and an electrode active material.

In another example embodiment, an electrode for a rechargeable lithium battery formed from the aforementioned electrode composition is provided.

In some example embodiments, a rechargeable lithium battery includes a positive electrode; a negative electrode; and an electrolyte, wherein at least one of the positive electrode and the negative electrode is the aforementioned electrode.

Example embodiments include a conductive material dispersed liquid that can improve processability by increasing the solid content while lowering the viscosity by introducing a fluorine-containing lithium salt into a conductive material dispersed liquid including nanocarbon, an electrode composition, an electrode for a rechargeable lithium battery, and a rechargeable lithium battery.

BRIEF DESCRIPTION OF THE DRAWINGS

FIGS. 1 to 4 are cross-sectional views schematically illustrating rechargeable lithium batteries, according to some example embodiments.
FIG. 5 is a graph illustrating the change in viscosity of the conductive material dispersed liquid according to the amount of fluorine-containing lithium salt, according to some example embodiments.

DETAILED DESCRIPTION

Hereinafter, example embodiments will be described in detail so that those of ordinary skill in the art can readily implement the example embodiments. However, this disclosure may be embodied in many different forms, and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.


**Conductive Material Dispersed Liquid**

Example embodiments include a conductive material dispersed liquid including nanocarbon, a fluorine-containing lithium salt, and a solvent.

The electrode of an energy storage device including a rechargeable lithium battery includes an electrode active material, a conductive material, and a binder. Generally, an electrode is made of or includes a substrate and a mixture, and the mixture is manufactured by coating a slurry including an electrode active material, a conductive material, and a binder on a substrate, drying the slurry, and then compressing the slurry.

Nanocarbon is typically used as a conductive material, but because this nanocarbon may not be uniformly dispersed in the slurry and has the property of readily agglomerating, there may be challenge in that the conductive material may not be evenly distributed during the manufacture of the electrode. To address this challenge, an example method includes preparing a slurry after first mixing a conductive material with a dispersant in a solvent to form a dispersion of the conductive material.

The solid content of this slurry is typically determined by the solid content of the conductive material dispersed liquid. A high solid content of the slurry has advantageous effects such as reduced processing costs, increased electrode drying efficiency, increased productivity, binder migration, and improved adhesive force.

However, as the solid content in the conductive material dispersed liquid increases to ensure the above-mentioned advantageous effects, the viscosity increases rapidly, which may cause challenges with processability. Therefore, it may be advantageous to develop a conductive material dispersed liquid that has a high solid content and a low viscosity.

Accordingly, some example embodiments include a conductive material dispersed liquid that can improve processability by increasing a solid content while lowering a viscosity compared to the prior art.

In order to achieve the above advantages, the conductive material dispersed liquid may include nanocarbon, a fluorine-containing lithium salt, and a solvent. Herein, "dispersed" refers to a state in which nanocarbon is uniformly distributed within the solvent such that visible phase separation does not occur, and the dispersed liquid may exhibit a zeta potential in a defined range (e.g., $\pm 10$ mV to $\pm 25$ mV), indicating colloidal stability.

In some example embodiments, the conductive material includes nanocarbon, which is dispersed in a solvent to form a conductive material dispersed liquid.

When an amount of nanocarbon is increased so as to increase the solid content in the conductive material dispersed liquid, the viscosity increases due to the nanocarbon, which has the property of readily agglomerating, and the processability deteriorates. Accordingly, by adding the fluorine-containing lithium salt together with nanocarbon into the conductive material dispersed liquid, a colloidal network can be formed while the zeta potential on the surface of the nanocarbon particles in the conductive material dispersed liquid decreases. Accordingly, when a colloidal network is formed, the viscosity of the conductive material dispersed liquid, which is a suspension, is reduced. Therefore, the fluorine-containing lithium salt may play a role in lowering the viscosity of the conductive material dispersed liquid. Because of this, the solid content in the conductive material dispersed liquid can be increased, processability can thus be improved, and processing costs can be reduced.

In some example embodiments, the fluorine-containing lithium salt may include at least one of $LiPF_6$, $LiBF_4$, lithium bis(fluorosulfonyl)imide (LiFSI), lithium bis(trifluoromethanesulfonyl)imide (LiTFSI), lithium bis(oxalato)borate (LiBOB), lithium difluoro(oxalato)borate (LiDFOB), or a combination thereof. Using a fluorine-containing lithium salt may achieve the advantageous effect of reducing the viscosity of the conductive material dispersed liquid.

Representative examples of the fluorine-containing lithium salt may include a fluorine-containing imide-based lithium salt, for example, at least one of lithium bis(fluorosulfonyl)imide (LiFSI), lithium bis(trifluoromethanesulfonyl)imide (LiTFSI), or a combination thereof. In this case, the effect of reducing the viscosity of the conductive material dispersed liquid due to the addition of the fluorine-containing lithium salt can be improved or maximized.

As an example, the fluorine-containing lithium salt may be included in an amount in a range of $\geq 0.001$ wt% to $\leq 1$ wt%, for example $\geq 0.001$ wt% to $\leq 0.5$ wt%, $\geq 0.005$ wt% to $\leq 0.1$ wt%, or $\geq 0.005$ wt% to $\leq 0.05$ wt% based on 100 wt% of the conductive material dispersed liquid. Within the above ranges, the reduction in viscosity of the conductive material dispersed liquid due to the addition of the fluorine-containing lithium salt can be improved or maximized.

In some example embodiments, the nanocarbon may include at least one of carbon black, carbon nanotubes, fullerene, graphene, or a combination thereof.

In some example embodiments, the nanocarbon may be included in an amount in a range of $\geq 1$ wt% to $\leq 20$ wt%, for example $\geq 3$ wt% to $\leq 15$ wt%, or $\geq 9$ wt% to $\leq 12$ wt% based on 100 wt% of the conductive material dispersed liquid. Within the above ranges, the effects of increasing solid content, improving processability, and improving conductivity due to the addition of nanocarbon can be improved or maximized.

As an example, the zeta potential of the nanocarbon may be in a range of $\geq \pm 10$ mV to $\leq \pm 25$ mV. When the surface of a particle is charged, electrostatic repulsion occurs, and the electrostatic repulsion can be expressed as zeta potential. The higher the zeta potential, the higher the repulsion between particles. However, nanocarbon according to some example embodiments is present together with a fluorine-containing lithium salt in the conductive material dispersed liquid, thereby lowering the zeta potential and lowering the repulsive force on the surface of the particles of the conductive material. As a result, a colloidal network can be formed within the conductive material dispersed liquid, improving dispersibility and effectively reducing the viscosity of the dispersed liquid.

In some example embodiments, the zeta potential can be measured using, a zeta potential measuring device (Zetasizer Nano ZS, Malvern Panalytical). For example, the zeta potential can be measured by electrophoretic light scattering (ELS) using a zeta potential measuring device (Zetasizer Nano ZS, Malvern Panalytical) at 25 °C.

In some example embodiments, the solid content in the conductive material dispersed liquid may be or include the nanocarbon and the fluorine-containing lithium salt, and the total solid content of the nanocarbon and the fluorine-containing lithium salt may be in a range of $\geq 1$ wt% to $\leq 20$ wt%, for example $\geq 3$ wt% to $\leq 15$ wt%, $\geq 9$ wt% to $\leq 13$ wt%, or $\geq 10$ wt% to $\leq 12$ wt% based on 100 wt% of the conductive material dispersed liquid. Within the above ranges, while sufficiently ensuring conductivity, processability can be improved to reduce processing costs and increase drying efficiency, and also effectively achieves the effect of improving adhesion.

As an example, the viscosity of the conductive material dispersed liquid may be in a range of $\geq 100$ cps to $\leq 2,000$ cps, for example $\geq 200$ cps to $\leq 1,800$ cps, $\geq 500$ cps to $\leq 1,600$ cps, $\geq 900$ cps to $\leq 1,500$ cps, $\geq 1,000$ cps to $\leq 1,400$ cps, or $\geq 1,300$ cps to $\leq 1,400$ cps. The viscosity may be measured at room temperature (20 °C to 25 °C), and may be measured at a shear rate of 10 s$^{-1}$. For example, the viscosity may be measured by using a rotational rheometer-type viscometer, the Rheostress 1 model from HÄKKE, at room temperature (25 °C) at a shear rate of 10 s$^{-1}$. When the above viscosity range is met, the conductive material dispersed liquid exhibits an appropriate viscosity, and thus an electrode can be readily manufactured using the conductive material dispersed liquid. In addition, by improving processability, processing costs can be reduced, drying efficiency can be increased, and adhesion can be improved.

In some example embodiments, the conductive material dispersed liquid may have a W value defined by Equation 1 in a range of $\geq 90$ to $\leq 20,000$, $\geq 150$ to $20,000$, or $\geq 90$ to $\leq 5000$, for example, $\geq 90$ to $\leq 2500$, $\geq 90$ to $\leq 2100$, or $\geq 600$ to $\leq 2100$. In this case, reducing or suppressing the increase in viscosity of the conductive material dispersed liquid due to the addition of the fluorine-containing lithium salt and improving adhesion through the increase in solid content due to the addition of nanocarbon can be achieved.

Equation 1:

$$W = W_S/W_F$$

In Equation 1, Ws represents a weight percent content of the sum of nanocarbon and fluorine-containing lithium salt relative to 100 wt% of the conductive material dispersed liquid, and $W_F$ represents the weight percent content of the fluorine-containing lithium salt relative to 100 wt% of the conductive material dispersed liquid.

For example, the solvent may be or include at least one of water, an amide-based polar organic solvent such as dimethylformamide, diethyl formamide, dimethyl acetamide (DMAc), and N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl -2-propanol (tert-butanol), pentanol, hexanol, heptanol, or octanol; glycols such as or including at least one of ethylene glycol, diethylene glycol, triethylene glycol, propylene glycol, 1,3-propanediol, 1,3-butanediol, 1,5-pentanediol, or hexylene glycol; polyhydric alcohols such as or including at least one of glycerin, trimethylolpropane, pentaerythritol, or sorbitol; glycol ethers such as or including at least one of ethylene glycol monomethyl ether, diethylene glycol monomethyl ether, triethylene glycol monomethyl ether, tetra ethylene glycol monomethyl ether, ethylene glycol monoethyl ether, diethylene glycol monoethyl ether, triethylene glycol mono ethyl ether, tetra ethylene glycol monoethyl ether, ethylene glycol monobutyl ether, diethylene glycol monobutyl ether, triethylene glycol monobutyl ether, or tetra ethylene glycol monobutyl ether; ketones such as or including at least one of acetone, methyl ethyl ketone, methyl propyl ketone, or cyclopentanone; esters such as or including at least one of ethyl acetate, γ-butyl lactone, and ε-propiolactone, and any one or a mixture of two or more of these may be used.

According to some example embodiments, the conductive material dispersed liquid may further include a dispersant, and may be further dispersed after adding the dispersant.

As an example, the conductive material dispersed liquid can be used in an electrode composition for a rechargeable lithium battery.

In some example embodiments, the conductive material dispersed liquid may not include an electrode active material. For example, the electrode active material may include at least one of a positive electrode active material and a negative electrode active material. Herein, the descriptions described below can be applied to the positive electrode active material or the negative electrode active material.

In some example embodiments, in the conductive material dispersed liquid, based on 100 wt% of the conductive material dispersed liquid, an amount of the electrode active material may be less than or equal to 0.5 wt% (including 0%), for example, less than or equal to 0.3 wt% (including 0%), less than or equal to 0.1 wt% (including 0%), or 0 wt%.

## Electrode Composition

In some example embodiments, an electrode composition including the aforementioned conductive material dispersed liquid and an electrode active material is provided.

In one example, the electrode composition may include the conductive material dispersed liquid and a separately prepared electrode active material.

As an example, the electrode active material may be prepared separately from the conductive material dispersed liquid, and may be combined with the conductive material dispersed liquid to form an electrode composition.

As an example, the electrode may be or include at least one of a positive electrode and a negative electrode, for example, a positive electrode.

Herein, the descriptions described below can be applied to the aforementioned positive electrode or negative electrode. When the electrode is a positive electrode, the description of the positive electrode active material is applied to the electrode active material, and when the electrode is a negative electrode, the description of the negative electrode active material can be applied to the electrode active material.

## Electrode for Rechargeable Lithium Battery

In some example embodiments, an electrode for a rechargeable lithium battery formed from, or including, the above-described electrode composition is provided.

In one example, the electrode may include an electrode current collector, and an electrode active material layer located on the electrode current collector and formed from the aforementioned electrode composition.

For example, the electrode may be or include at least one of a positive electrode and a negative electrode. For example, the electrode may be or include a positive electrode.

Accordingly, when the electrode is a positive electrode, the electrode includes a positive electrode current collector; and a positive electrode active material layer located on the positive electrode current collector and formed from the aforementioned electrode composition. For example, components included in the positive electrode active material layer include nanocarbon, and fluorine-containing lithium salt, which are solids included in the aforementioned electrode composition. In addition, components that can be included in the positive electrode active material layer described later may be further included.

Additionally, when the electrode is a negative electrode, the electrode includes a negative electrode current collector; and a negative electrode active material layer located on the negative electrode current collector and formed from the aforementioned electrode composition. For example, components included in the negative electrode active material layer include nanocarbon and fluorine-containing lithium salt, which are solids included in the aforementioned electrode composition. In addition, components that can be included in the negative electrode active material layer described later may be further included.

Herein, the description described later can be applied to the aforementioned positive electrode or negative electrode, and therefore, the description described later can be applied equally to the positive electrode current collector, positive electrode active material layer, negative electrode current collector, and negative electrode active material layer.

Meanwhile, general methods in the relevant technical field can be applied to the method of forming the electrode.

## Rechargeable Lithium Battery

In some example embodiments, a rechargeable lithium battery includes a positive electrode, a negative electrode, and an electrolyte, wherein at least one of the positive electrode and negative electrode is or includes the aforementioned electrode. As an example, the rechargeable lithium battery may include a positive electrode, a negative electrode, a separator between the positive electrode and the negative electrode, and an electrolyte solution.

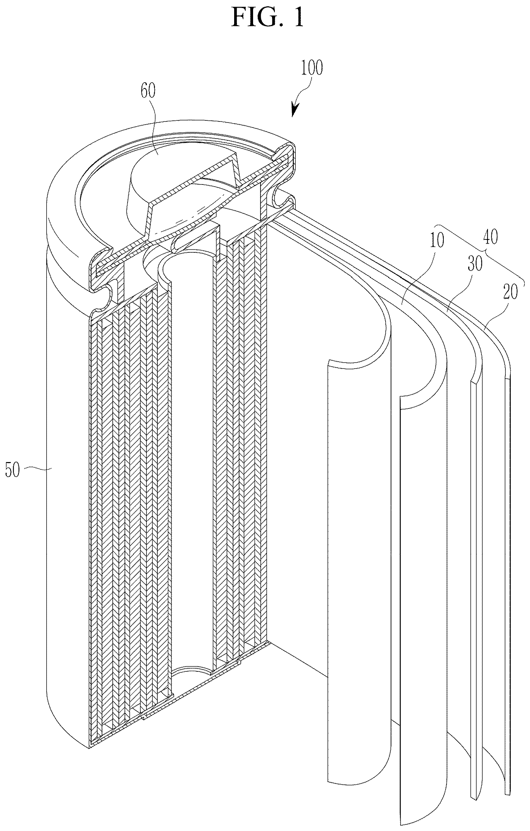

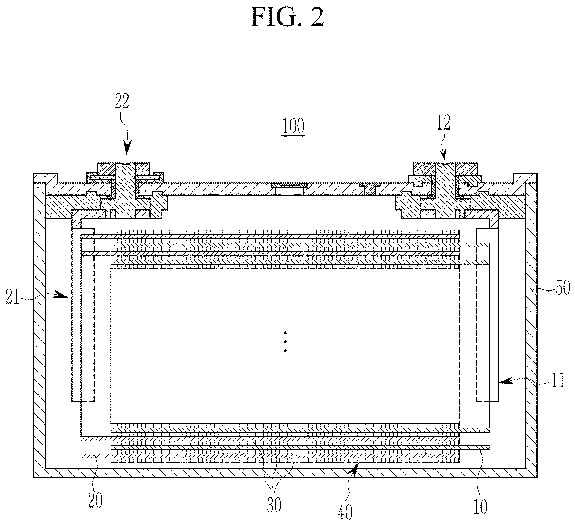

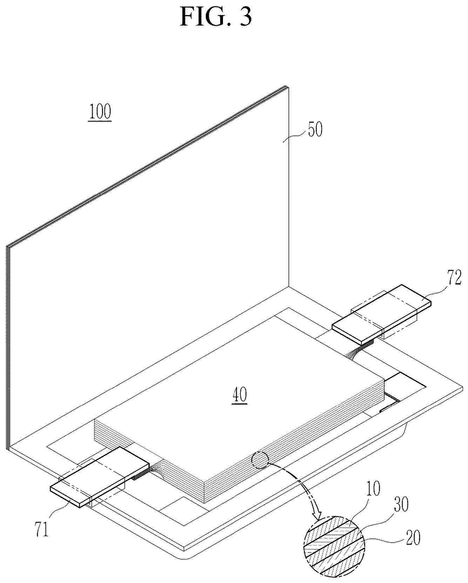

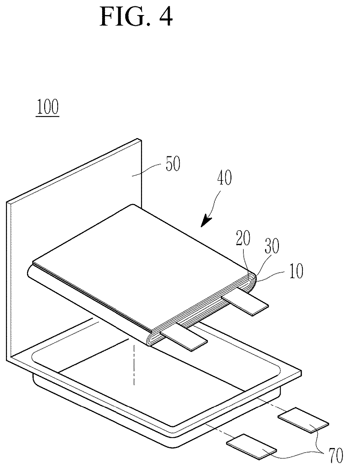

The rechargeable lithium battery may be classified into cylindrical, prismatic, pouch, coin, etc. depending on the shape. FIGS. 1 to 4 are schematic diagrams illustrating the rechargeable lithium battery according to some example embodiments, where FIG. 1 is a cylindrical battery, FIG. 2 is a prismatic battery, and FIGS. 3 and 4 are pouch-shaped batteries. Referring to FIGS. 1 to 4, the rechargeable lithium battery 100 includes an electrode assembly 40 having a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50, as illustrated in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70 illustrated in FIG. 4, and a positive electrode tab 71 and a negative electrode tab 72 illustrated in FIG. 3, the electrode tabs 70/71/72 forming an electrical path for inducing the current formed in the electrode assembly 40 to the outside of the battery 100.

## Positive Electrode

The positive electrode includes a positive electrode current collector; and a positive electrode active material layer on the positive electrode current collector. The positive electrode active material layer may optionally further include a binder, a conductive material, or a combination thereof.

### Positive Electrode Active Material

The positive electrode active material may include a compound (lithiated intercalation compound) capable of intercalating and deintercallating lithium. For example, at least one of a composite oxide of lithium and a metal such as or including at least one of from cobalt, manganese, nickel, and combinations thereof may be used.

The composite oxide may be or include a lithium transition metal composite oxide, and examples thereof may include at least one of lithium nickel-based oxide, lithium cobalt-based oxide, lithium manganese-based oxide, lithium iron phosphate-based compound, cobalt-free nickel-manganese-based oxide, and overlithiated layered oxide, or a combination thereof.

For example, the positive electrode active material may be or include a high-nickel positive electrode active material having a nickel content of greater than or equal to 80 mol% based on 100 mol% of a metal excluding lithium in the lithium transition metal composite oxide. A nickel content in the high-nickel positive electrode active material may be greater than or equal to 85 mol%, greater than or equal to 90 mol%, greater than or equal to 91 mol%, or greater than or equal to 94 mol% and less than or equal to 99 mol% based on 100 mol% of the metal excluding lithium. The high-nickel positive electrode active material can realize high capacity and can be applied to high-capacity, high-density rechargeable lithium batteries.

As another example, a compound represented by any one of the following chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-}$

$_cCo_bX_cO_{2-\alpha}D_\alpha$ $(0.90 \leq a \leq 1.8, 0 \leq b \leq 0.5, 0 \leq c \leq 0.5, 0 < \alpha < 2); Li_aNi_{1-b-c}Mn_bX_cO_{2-\alpha}D_\alpha$ $(0.90 \leq a \leq 1.8, 0 \leq b \leq 0.5, 0 < a < 2); Li_aNi_bCo_cL^1_dGeO_2$ $(0.90 \leq a \leq 1.8, 0 \leq b \leq 0.9, 0 \leq c \leq 0.5, 0 \leq d \leq 0.5, 0 \leq e \leq 0.1); Li_aNiG_bO_2$ $(0.90 \leq a \leq 1.8, 0.001 \leq b \leq 0.1); Li_aCoG_bO_2$ $(0.90 \leq a \leq 1.8, 0.001 \leq b \leq 0.1); Li_aMn_{1-g}G_bO_2$ $(0.90 \leq a \leq 1.8, 0.001 \leq b \leq 0.1); Li_aMn_2G_bO_4$ $(0.90 \leq a \leq 1.8, 0.001 \leq b \leq 0.1); Li_aMn_{1-g}G_gPO_4$ $(0.90 \leq a \leq 1.8, 0 \leq g \leq 0.5); Li_{(3-f)}Fe_2(PO_4)_3$ $(0 \leq f \leq 2); Li_aFePO_4$ $(0.90 \leq a \leq 1.8)$

In the above chemical formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; Q is or includes at least one of Ti, Mo, Mn, or a combination thereof; Z is or includes at least one of Cr, V, Fe, Sc, Y, or a combination thereof; and $L^1$ is or includes at least one of Mn, Al or a combination thereof.

Binder

The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth) acrylic resin, a polyester resin, and nylon, but are not limited thereto.

Conductive Material

The conductive material is included to provide electrode conductivity, and any electrically conductive material may be used as a conductive material unless the electrically conductive material causes a chemical change in the battery. Examples of the conductive material may include a carbon-based material such as or including at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

Each amount of the binder and the conductive material may be in a range of $\geq 0.5$ wt% to $\leq 5$ wt% based on 100 wt% of the positive electrode active material layer.

The positive electrode current collector may include Al, but is not limited thereto.

**Negative Electrode**

The negative electrode may include a current collector; and a negative electrode active material layer on the current collector, and the negative electrode active material layer may include a negative electrode active material and may further include a binder, a conductive material, or a combination thereof.

Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, $SiO_x$ $(0 < x < 2)$, a Si-Q alloy (wherein Q is an element such as or including at least one of an alkali metal, an alkaline-earth metal, a Group 13 element, a Group 14 element (excluding Si), a Group 15 element, a Group 16 element, a transition metal, a rare earth element, and a combination thereof, for example at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, $SnO_2$, a Sn alloy, or a combination thereof.

The silicon-carbon composite may be or include at least one of a composite of silicon and amorphous carbon. An

average particle diameter ($D_{50}$) of the silicon-carbon composite particles may be, for example, in a range of $\geq 0.5\ \mu$m to $\leq 20\ \mu$m. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon, and silicon particles and an amorphous carbon coating layer on the surface of the core. The crystalline carbon may be or include artificial graphite, natural graphite, or a combination thereof. The amorphous carbon may include at least one of soft carbon or hard carbon, a mesophase pitch carbonized product, and calcined coke.

When the silicon-carbon composite includes silicon and amorphous carbon, a silicon content may be in a range of $\geq 10$ wt% to $\leq 50$ wt% and a content of amorphous carbon may be $\geq 50$ wt% to $\leq 90$ wt% based on 100 wt% of the silicon-carbon composite. In addition, when the composite includes silicon, amorphous carbon, and crystalline carbon, a silicon content may be in a range of $\geq 10$ wt% to $\leq 50$ wt%, a content of crystalline carbon may be in a range of $\geq 10$ wt% to $\leq 70$ wt%, and a content of amorphous carbon may be in a range of $\geq 20$ wt% to $\leq 40$ wt%, based on 100 wt% of the silicon-carbon composite.

Additionally, a thickness of the amorphous carbon coating layer may be in a range of $\geq 5$ nm to $\leq 100$ nm. An average particle diameter ($D_{50}$) of the silicon particles (primary particles) may be in a range of $\geq 10$ nm to $\leq 1\ \mu$m, or $\geq 10$ nm to $\leq 200$ nm. The silicon particles may be in the form of silicon alone, in the form of a silicon alloy, or in an oxidized form. The oxidized form of silicon may be represented by $SiO_x$ (0<x<2). At this time, the atomic content ratio of Si:O, which indicates a degree of oxidation, may be in a range of $\geq 99:1$ to $\leq 33:67$. As used herein, when a definition is not otherwise provided, an average particle diameter ($D_{50}$) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio in a range of $\geq 1:99$ to $\leq 90:10$.

Binder

The binder is configured to adhere the negative electrode active material particles to each other, and to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

Conductive Material

The conductive material is included to provide electrode conductivity, and any electrically conductive material may be used as a conductive material unless the electrically conductive material causes a chemical change in the battery. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

A content of the negative electrode active material may be in a range of $\geq 95$ wt% to $\leq 99.9$ wt% based on 100 wt% of the negative electrode active material layer, and a content of the binder may be in a range of $\geq 0.5$ wt% to $\leq 5$ wt% based on 100 wt% of the negative electrode active material layer. For example, the negative electrode active material layer may include $\geq 90$ wt% to $\leq 99$ wt% of the negative electrode active material, $\geq 0.5$ wt% to $\leq 5$ wt% of the binder, and $\geq 0.5$ wt% to $\leq 5$ wt% of the conductive material.

Current Collector

The negative electrode current collector may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be in a range of, for example, $\geq 1$ $\mu$m to $\leq 20$ $\mu$m, $\geq 5$ $\mu$m to $\leq 15$ $\mu$m, or $\geq 7$ $\mu$m to $\leq 10$ $\mu$m.

**Electrolyte**

For example, the electrolyte for a rechargeable lithium battery may be or include an electrolyte solution, which may include a non-aqueous organic solvent and a lithium salt.

The non-aqueous organic solvent may constitute a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types of solvents, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio in a range of $\geq 1:1$ to $\leq 1:9$.

The non-aqueous organic solvent may further include an aromatic hydrocarbon-based organic solvent. For example, a carbonate-based solvent and an aromatic hydrocarbon-based organic solvent may be mixed and used in a volume ratio in a range of $\geq 1:1$ to $\leq 30:1$.

The electrolyte solution may further include at least one of vinylethyl carbonate, vinylene carbonate, or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

A concentration of lithium salt may be within the range of $\geq 0.1$ M to $\leq 2.0$ M. When the concentration of lithium salt is within the above range, the electrolyte solution has appropriate ionic conductivity and viscosity, and thus desired or improved performance can be achieved, and lithium ions can move more effectively.

**Separator**

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof, on one or both surfaces of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness in a range of $\geq 1$ $\mu$m to $\leq 40$ $\mu$m, for example, $\geq 1$ $\mu$m to $\leq 30$ $\mu$m, $\geq 1$ $\mu$m to $\leq 20$ $\mu$m, $\geq 5$ $\mu$m to $\leq 15$ $\mu$m, or $\geq 10$ $\mu$m to $\leq 15$ $\mu$m.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto. An average particle diameter ($D_{50}$) of the inorganic particles may be in a range of $\geq 1$ nm to $\leq 2000$ nm, for example, $\geq 100$ nm to $\leq 1000$ nm, or $\geq 100$ nm to $\leq 700$ nm.

The organic material and the inorganic material may be mixed in one coating layer, or a coating layer including an organic material and a coating layer including an inorganic material may be stacked.

The thickness of the coating layer may be in a range of $\geq 0.5$ $\mu$m to $\leq 20$ $\mu$m, for example, $\geq 1$ $\mu$m to $\leq 10$ $\mu$m, or $\geq 1$ $\mu$m to $\leq 5$ $\mu$m.

Examples and comparative examples of the present disclosure are described below. However, the following examples are only examples of the present disclosure, and the present disclosure is not limited to the following examples.

## Example 1

9 wt% of multi-walled carbon nanotube (MWCNT) and 0.005 wt% of LiTFSI were mixed in an NMP solvent to prepare a conductive material dispersed liquid.

99 wt% of a positive electrode active material ($LiCoO_2$) and 1 wt% of a polyvinylidene fluoride binder were mixed in an NMP solvent to prepare a composition containing the positive electrode active material.

The conductive material dispersed liquid and the positive electrode active material-containing composition were mixed in a weight ratio of 1:9 to prepare a positive electrode slurry, and the positive electrode slurry was coated on an aluminum foil current collector, and then dried and compressed to manufacture a positive electrode.

Subsequently, a negative electrode active material layer slurry was prepared by mixing 97.5 wt% of a graphite negative electrode active material, 1.5 wt% of caroxymethyl cellulose, and 1 wt% of a styrene butadiene rubber in a water solvent. The negative electrode active material layer slurry was coated on a copper foil current collector, and then dried and compressed to manufacture a negative electrode.

The positive and negative electrodes were used with a polytetrafluoroethylene separator and an electrolyte solution prepared by dissolving 1 M $LiPF_6$ in a mixed solvent of ethylene carbonate and dimethyl carbonate in a volume ratio of 3:7 to manufacture a rechargeable lithium battery cell in a common method.

## Example 2

A conductive material dispersed liquid, a positive electrode, and a rechargeable lithium battery cell were manufactured substantially in the same manner as in Example 1, with a difference that the conductive material dispersed liquid was prepared by using 9 wt% of multi-walled carbon nanotube (MWCNT) and 0.01 wt% of LiTFSI.

## Example 3

A conductive material dispersed liquid, a positive electrode, and a rechargeable lithium battery cell were manufactured substantially in the same manner as in Example 1, with a difference that the conductive material dispersed liquid was prepared by using 9 wt% of multi-walled carbon nanotube (MWCNT) and 0.02 wt% of LiTFSI.

### Example 4

A conductive material dispersed liquid, a positive electrode, and a rechargeable lithium battery cell were manufactured substantially in the same manner as in Example 1, with a difference that the conductive material dispersed liquid was prepared by using 9 wt% of multi-walled carbon nanotube (MWCNT) and 0.05 wt% of LiTFSI.

### Example 5

A conductive material dispersed liquid, a positive electrode, and a rechargeable lithium battery cell were manufactured substantially in the same manner as in Example 1, with a difference that the conductive material dispersed liquid was prepared by using 9 wt% of multi-walled carbon nanotube (MWCNT) and 0.1 wt% of LiTFSI.

### Example 6

A conductive material dispersed liquid, a positive electrode, and a rechargeable lithium battery cell were manufactured substantially in the same manner as in Example 1, with a difference that the conductive material dispersed liquid was prepared by using 9 wt% of multi-walled carbon nanotube (MWCNT) and 1 wt% of LiTFSI.

### Comparative Example 1

A conductive material dispersed liquid, a positive electrode, and a rechargeable lithium battery cell were manufactured substantially in the same manner as in Example 1, with a difference that the conductive material dispersed liquid was prepared by using 9 wt% of multi-walled carbon nanotube (MWCNT) alone.

### Comparative Example 2

A rechargeable lithium battery cell was manufactured substantially in the same manner as in Example 1, with a difference that a positive electrode was manufactured by mixing 98.5 wt% of a positive electrode active material ($LiCoO_2$), 1.0 wt% of a polyvinylidene fluoride binder, and 0.5 wt% of a multi-walled carbon nanotube (MWCNT) conductive material to prepare a positive electrode active material layer slurry without preparing the conductive material dispersed liquid and the positive electrode active material-containing composition, coating the positive electrode active material layer slurry on an aluminum foil current collector, and then drying and compressing the positive electrode active material layer slurry.

### Evaluation Example 1: Viscosity Evaluation

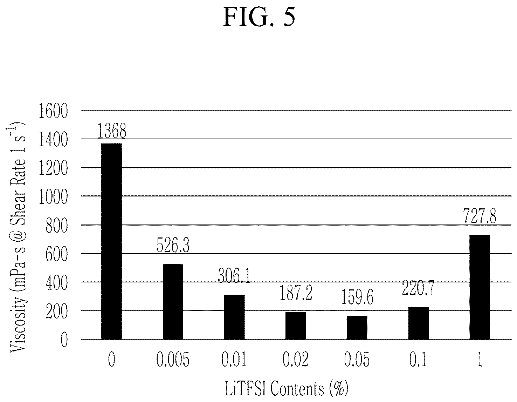

Each conductive material dispersed liquid of Examples 1 to 6 and Comparative Examples 1 was measured with respect to changes in viscosity according to an amount of fluorine-containing lithium salt, and the results are shown in FIG. 5. Herein, the viscosity was measured by using a rotational rheometer-type viscometer, Rheostress 1 model from HÄKKE, at room temperature (25 °C) at a shear rate of 10 s$^{-1}$. Unless otherwise specified, all viscosity values described in the present specification were measured under the same conditions.

As shown in FIG. 5, Comparative Example 1, of which the conductive material dispersed liquid was prepared by adding no fluorine-containing lithium salt, exhibited too high viscosity. Accordingly, the conductive material dispersed liquid of Comparative Example 1 exhibited challenges in increasing a solid content as in Evaluation Example 2 to be described below.

On the contrary, Examples 1 to 6, in which the conductive material dispersed liquids were prepared by adding fluorine-containing lithium salt, exhibited a sufficiently low viscosity. According to the above examples, adding nanocarbon increases a solid content, as shown in Evaluation Example 2 to be described below.

### Evaluation Example 2: Measurement of Solid Content

In each conductive material dispersed liquid of Examples 1 to 5, a solid content was increased by adding nanocarbon, while fixing an amount of fluorine-containing lithium salt, until viscosity reached 1,300 cps, when measured at a shear rate of 10 s$^{-1}$ at room temperature (25 °C), which were respectively named as Examples 7 to 11.

Examples 7 to 11 were measured with respect to a maximum solid content under the above viscosity condition, and the results are shown in Table 1 below. Herein, the solid content represents a total content of the nanocarbon and the fluorine-containing lithium salt based on 100 wt% of the conductive material dispersed liquid.

Table 1:

|  | Amount of fluorine-containing lithium salt | Solid content |
|---|---|---|
| Example 7 | 0.005 wt% | 10.5 wt% |
| Example 8 | 0.01 wt% | 11.2 wt% |
| Example 9 | 0.02 wt% | 12 wt% |
| Example 10 | 0.05 wt% | 12.3 wt% |
| Example 11 | 0.1 wt% | 11.6 wt% |
| Comparative Example 1 | 0 wt% | 9 wt% |

As shown in Table 1, the conductive material dispersed liquids of Examples 7 to 11 exhibited a solid content higher than the 9 wt% solid content of the conductive material dispersed liquid of Comparative Example 1.

Accordingly, Examples 7 to 11, which include the conductive material dispersed liquids according to some example embodiments, exhibited similar viscosity to Comparative Example 1 that includes the conductive material dispersed liquid but not the fluorine-containing lithium salt, but the solid contents of the example embodiments were still increased, compared to the solid content of Comparative Example 1. Accordingly, a positive electrode manufactured by using such a conductive material dispersed liquid, improves battery performance due to desired or improved conductivity, but reduces a processing cost and improves producibility. In addition, a positive electrode manufactured by using such a conductive material dispersed liquid improves binder migration and achieves better adhesion.

**Evaluation Example 3: Evaluation of Zeta Potential**

Nanocarbon in the conductive material dispersed liquids of Examples 1 and 6, and in Comparative Example 1, was measured with respect to a zeta potential by electrophoretic light scattering (ELS) using a zeta potential measuring device (Zetasizer Nano ZS, Malvern Panalytical) at 25 °C, and the results are shown in Table 2 below.

Table 2:

|  | Zeta potential (mV) |
|---|---|
| Example 1 | -20.6 |
| Example 6 | -3.7 |
| Comparative Example 1 | -37.2 |

The nanocarbon in the conductive material dispersed liquid of Comparative Example 1 was confirmed to have a zeta potential outside of a range of $\pm$ 10 mV to $\pm$ 25 mV.

In contrast, the nanocarbon in the conductive material dispersed liquid of Example 1 was confirmed to have a zeta potential within the range of $\pm$ 10 mV to $\pm$ 25 mV, and thus exhibited desired or improved dispersion.

On the other hand, the conductive material dispersed liquid of Example 6, as examined in Evaluation Example 1, was confirmed to have sufficiently low viscosity, but as its zeta potential was lowered, dispersibility was deteriorated.

**Evaluation Example 4: Adhesion Evaluation**

In order to evaluate adhesion, each of the positive electrodes according to Examples 1 and 7 to 11, and Comparative Example 1, was measured with respect to adhesion strength by attaching a polyvinylchloride (PVC) double-sided adhesive tape on a positive electrode active material layer formed on a positive electrode current collector, and peeling off the tape to 180 ° at 10 mm/min.

Herein, when an adhesive force was greater than 2.5 gf/cm, '◎' was given, when the adhesive force is between 1.8 gf/cm and 2.5 gf/cm, 'O' was given, and when the adhesive force is less than 1.8 gf/cm, and '×' was given, and the results are shown in Table 3 below.

Table 3:

|  | Adhesion |
|---|---|
| Example 1 | ○ |

(continued)

|  | Adhesion |
|---|---|
| Example 7 | ◎ |
| Example 8 | ◎ |
| Example 9 | ◎ |
| Example 10 | ○ |
| Example 11 | ○ |
| Comparative Example 1 | ✕ |

As shown in Table 3, the positive electrodes of Examples 1 and 7 to 11 exhibited desired or improved adhesion. In particular, the conductive material dispersed liquids with a high solid content of Example 7 to 9 exhibited much more desired or improved adhesion than the conductive material dispersed liquids with a high solid content of Example 1.

In contrast, the positive electrode of Comparative Example 1, which was manufactured by preparing a conductive material dispersed liquid but adding no fluorine-containing lithium salt, exhibited inferior adhesion to Examples 7 to 11.

While this disclosure has been described in connection with what is presently considered to be practical example embodiments, it is to be understood that this disclosure is not limited to the disclosed example embodiments. On the contrary, this disclosure is intended to cover various modifications and equivalent arrangements included within the spirit and scope of the appended claims.

**Description of Symbols:**

| 100: | rechargeable lithium battery | 10: | positive electrode |
|---|---|---|---|
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

1.   A conductive material dispersed liquid comprising:

nanocarbon,
a fluorine-containing lithium salt, and
a solvent.

2.   The conductive material dispersed liquid as claimed in claim 1, wherein a viscosity of the conductive material dispersed liquid is in a range of $\geq$ 100 cps to $\leq$ 2,000 cps.

3.   The conductive material dispersed liquid as claimed in claim 1 or 2, wherein a total solid content of the nanocarbon and the fluorine-containing lithium salt is in a range of $\geq$ 1 wt% to $\leq$ 20 wt% based on 100 wt% of the conductive material dispersed liquid.

4.   The conductive material dispersed liquid as claimed in any of the claims 1 to 3, wherein the fluorine-containing lithium salt comprises at least one of $LiPF_6$, $LiBF_4$, lithium bis(fluorosulfonyl)imide (LiFSI), lithium bis(trifluoromethanesulfonyl)imide (LiTFSI), lithium bis(oxalato)borate (LiBOB), and lithium difluoro(oxalato)borate (LiDFOB).

5.   The conductive material dispersed liquid as claimed in any of the claims 1 to 4, wherein the fluorine-containing lithium salt comprises a fluorine-containing imide-based lithium salt.

6.   The conductive material dispersed liquid as claimed in any of the claims 1 to 5, wherein the fluorine-containing lithium salt is included in an amount in a range of $\geq$ 0.001 wt% to $\leq$ 1 wt% based on 100 wt% of the conductive material dispersed liquid.

7. The conductive material dispersed liquid as claimed in any of the claims 1 to 6, wherein the nanocarbon comprises at least one of carbon black, carbon nanotube, fullerene, and graphene.

8. The conductive material dispersed liquid as claimed in any of the claims 1 to 7, wherein the nanocarbon has a zeta potential measured by using a zeta potential measuring device in a range of $\geq \pm 10$ mV to $\leq \pm 25$ mV.

9. The conductive material dispersed liquid as claimed in any of the claims 1 to 8, wherein the nanocarbon is included in an amount in a range of $\geq 1$ wt% to $\leq 20$ wt% based on 100 wt% of the conductive material dispersed liquid.

10. The conductive material dispersed liquid as claimed in any of the claims 1 to 9, wherein a W value defined by Equation 1 is in a range of $\geq 90$ to $\leq 20{,}000$:

$$\text{Equation 1:}$$

$$W = W_S/W_F, \text{ and}$$

wherein, in Equation 1, Ws represents a weight percent content of the sum of nanocarbon and fluorine-containing lithium salt relative to 100 wt% of the conductive material dispersed liquid, and $W_F$ represents the weight percent content of the fluorine-containing lithium salt relative to 100 wt% of the conductive material dispersed liquid.

11. The conductive material dispersed liquid as claimed in any of the claims 1 to 10, wherein an electrode active material is not included.

12. An electrode composition comprising:

the conductive material dispersed liquid claimed in any of the claims 1 to 11; and
an electrode active material.

13. An electrode for a rechargeable lithium battery (100) comprising the electrode composition as claimed in claim 12.

14. A rechargeable lithium battery (100), comprising

a positive electrode (10);
a negative electrode (20); and
an electrolyte;
wherein at least one of the positive electrode (10) and the negative electrode (20) comprises the electrode as claimed in claim 13.

# FIG. 1

# FIG. 2

# FIG. 3

# FIG. 4

# FIG. 5

Europäisches
Patentamt

European
Patent Office

Office européen
des brevets

## EUROPEAN SEARCH REPORT

**Application Number**

EP 25 17 8016

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 509 872 A (UNIV CENTRAL SOUTH) 22 March 2019 (2019-03-22) | 1-8, 10-14 | INV. H01M4/13 H01M4/62 H01M10/0525 |
| A | * example 4 * | 9 | |
| X | CN 114 937 765 A (SHANDONG SECRETA INNOVATION RESEARCH INSTITUTE LTD) 23 August 2022 (2022-08-23) | 1,2,4-8, 10-14 | |
| A | * example 3 * | 9 | |
| X | US 2023/114916 A1 (TANG WEICHAO [CN] ET AL) 13 April 2023 (2023-04-13) | 1-8,10, 12-14 | |
| A | * example 1 * | 9 | |

| | TECHNICAL FIELDS SEARCHED (IPC) |
|---|---|
| | H01M |

The present search report has been drawn up for all claims

| Place of search | Date of completion of the search | Examiner |
|---|---|---|
| Munich | 8 October 2025 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 8016

This annex lists the patent family members relating to the patent documents cited in  the above-mentioned European search report.
The members are as contained in the European Patent Office EDP file on
The European Patent Office is in no way liable for these particulars which are merely given for the purpose of information.

08-10-2025

| Patent document cited in search report | | Publication date | Patent family member(s) | | Publication date |
|---|---|---|---|---|---|
| CN 109509872 | A | 22-03-2019 | NONE | | |
| CN 114937765 | A | 23-08-2022 | NONE | | |
| US 2023114916 | A1 | 13-04-2023 | CN | 113937288 A | 14-01-2022 |
| | | | US | 2023114916 A1 | 13-04-2023 |
| | | | WO | 2022001429 A1 | 06-01-2022 |

EPO FORM P0459

For more details about this annex : see Official Journal of the European Patent Office, No. 12/82

## EP 4 654 275 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240065987